# FASCICULE DE BREVET EUROPEEN

(11) **EP 1 943 145 B1**
(45) Date de publication et mention de la délivrance du brevet: **18.02.2009**
(21) Numéro de dépôt: 06831287.5
(22) Date de dépôt: 24.10.2006
(51) Int. Cl.: B64D 27/26

(54) **DISPOSITIF D'ATTACHE AVANT D'UN TURBOREACTEUR A UN MÂT DE FIXATION D'UN AERONEF**
BEFESTIGUNGSVORRICHTUNG FÜR EINEN TURBOSTRAHLMOTOR MIT EINER STREBE ZUR BEFESTIGUNG AN EINEM FLUGZEUG
TURBOJET ENGINE FRONT FASTENING DEVICE PROVIDED WITH A STRUT FOR FIXING TO AN AIRCRAFT

(30) Priorité: 31.10.2005 FR 0553304
(43) Date de publication de la demande: 16.07.2008
(73) Titulaire: AIRBUS France, 31060 Toulouse Cedex 9 (FR)
(72) Inventeur: MARCHE, Hervé, F-31120 Roquettes (FR)
(74) Mandataire: Lebrette, Camille
(86) Numéro de dépôt international: PCT/FR2006/051093
(87) Numéro de publication internationale: WO 2007/051938

(56) Documents cités:
- EP-A- 0 844 172
- EP-A- 1 571 080

## Description

L'invention concerne un dispositif d'attache reliant un turboréacteur à un mât de fixation d'un aéronef. L'invention concerne plus particulièrement un dispositif d'attache avant apte à reprendre les efforts de poussée auxquels est soumis un turboréacteur d'aéronef.

Un turboréacteur peut être monté à différents endroits sur un aéronef, par le biais d'un mât de fixation appartenant à la structure dudit aéronef. Par exemple, le turboréacteur peut être suspendu, par l'intermédiaire d'un tel mât de fixation, à l'intrados de la voilure de l'aéronef, ou fixé latéralement au fuselage, ou monté à l'arrière de l'aéronef, au niveau de l'empennage vertical arrière. Des moyens d'accrochage, reliant le mât de fixation au turboréacteur, ont pour fonction d'assurer la transmission des efforts mécaniques entre le turboréacteur et la structure de l'aéronef.

Les efforts transmis à la structure de l'aéronef par les moyens d'accrochage sont principalement les efforts de poussée du turboréacteur, qui s'étendent parallèlement à l'axe du turboréacteur, les efforts latéraux, dus notamment aux rafales de vent auxquelles sont soumis le turboréacteur et l'aéronef en général, et les efforts verticaux dus à la masse dudit turboréacteur. Les moyens d'accrochage doivent par ailleurs absorber les déformations du turboréacteur dues, par exemple, aux variations dimensionnelles du fait de dilatations ou contractions thermiques pendant les différentes phases de vol de l'aéronef.

Généralement, les moyens d'accrochage du turboréacteur au mât de fixation de l'aéronef comprennent un dispositif d'attache avant et un dispositif d'attache arrière.

On connaît notamment des moyens d'accrochage par lesquels le carter central du turboréacteur est fixé au mât de fixation au moyen du dispositif d'attache avant et du dispositif d'attache arrière. Dans ce cas, le dispositif d'attache avant reprend les efforts de poussée du turboréacteur ainsi que les efforts latéraux et verticaux. Le dispositif d'attache arrière reprend, lui, les efforts latéraux et verticaux.

D'autres moyens d'accrochage comportent un dispositif d'attache avant, disposé entre le mât de fixation et le carter de soufflante, qui reprend les efforts latéraux et verticaux, et un dispositif d'attache arrière, disposé entre le mât de fixation et le carter central, qui reprend les efforts de poussée, les efforts latéraux et les efforts verticaux. La reprise des efforts de poussée se fait alors par l'intermédiaire de deux bielles longues, reliant le dispositif d'attache arrière à une partie avant du carter central.

Du fait des efforts de poussée du turboréacteur, et plus précisément du fait de la reprise desdits efforts de poussée par les moyens d'attache et le mât de fixation, ledit turboréacteur est soumis à des flexions importantes, qui tendent à diminuer la durée de vie du turboréacteur.

Dans l'invention, on cherche à fournir un dispositif d'attache du turboréacteur à un mât de fixation apte à reprendre les efforts de poussée du turboréacteur et à les transmettre au mât de fixation, qui ne soumette pas le turboréacteur à des efforts de flexion importants.

Pour cela l'invention propose un mécanisme d'attache avant, reliant le mât de fixation au carter de soufflante du turboréacteur, dont le vecteur de reprise des efforts de poussée, résultant des différents points d'attache entre ledit mécanisme d'attache et le turboréacteur, est directement confondu avec l'axe du turboréacteur. Le mécanisme d'attache avant selon l'invention comporte une pièce intermédiaire, disposée sous une pièce principale du mécanisme d'attache avant du turboréacteur. La pièce intermédiaire est liée à la pièce principale par un premier système d'attache dont le point de convergence se trouve sur l'axe du turboréacteur. La pièce intermédiaire est par ailleurs reliée au turboréacteur par un second système d'attache dont le point de convergence se situe également sur l'axe du moteur, mais en amont du point de convergence du premier système d'attache. Le mécanisme d'attache avant selon l'invention se comporte comme si la poussée du moteur transitait entre les deux points de convergence des systèmes d'attache dudit mécanisme d'attache avant, c'est-à-dire selon l'axe du turboréacteur, et donc sans engendrer la moindre flexion dudit turboréacteur, le couple étant naturellement totalement repris par le mât de fixation. Le second système d'attache, reliant la pièce intermédiaire au turboréacteur, comporte par exemple un système de bielles à l'avant et un palonnier à l'arrière. Par avant et arrière, on entend par rapport au sens d'avancement d'un aéronef muni d'un tel turboréacteur. La pièce intermédiaire selon l'invention, du fait du palonnier et des systèmes de bielles la reliant d'une part au turboréacteur et d'autre part à la pièce principale du mécanisme d'attache avant, a une cinématique particulière qui permet un transfert des efforts de poussée le long de l'axe du turboréacteur. La géométrie du mécanisme d'attache avant selon l'invention est étudiée pour que la résultante des différents points de fixation soit confondue avec l'axe du turboréacteur afin que ledit turboréacteur ne subisse aucun effort de flexion.

L'invention a donc pour objet un ensemble turboréacteur et dispositif d'attache avant du turboréacteur à un mât de fixation d'aéronef apte à reprendre les efforts de poussée du turboréacteur, caractérisé en ce qu'il comporte une ferrure supérieure, une ferrure inférieure, des attaches de fixation primaires reliant la ferrure supérieure à la ferrure inférieure et des attaches de fixation secondaires reliant la ferrure inférieure au turboréacteur, le vecteur de reprise des efforts de poussée, résultant d'une part du point de convergence des vecteurs primaires passant par les attaches de fixation primaires, et d'autre part du point de convergence des vecteurs secondaires passant par les attaches de fixation secondaires, et qui transmet les efforts de poussée du turboréacteur au mât de fixation, s'étend selon l'axe du turboréacteur.

Par point de fixation, on entend tout moyen d'attache ponctuel, permettant de relier en un point précis un élément à un autre.

Selon des exemples de réalisation particuliers de l'ensemble selon l'invention ledit ensemble peut comporter tout ou parties des caractéristiques supplémentaires suivantes :
- le point de convergence des vecteurs primaires est situé sur l'axe du turboréacteur;
- le point de convergence des vecteurs secondaires est situé sur l'axe du turboréacteur;
- le point de convergence des vecteurs primaires est situé en aval du point de convergence des vecteurs secondaires ;
- le dispositif d'attache avant comporte des attaches primaires munies d'au moins une bielle primaire avant et d'au moins une bielle primaire arrière, de manière à relier en deux points de fixation primaires la ferrure supérieure et la ferrure inférieure ;
- le dispositif d'attache avant comporte des attaches secondaires munies d'au moins une bielle secondaire avant et d'au moins deux bielles secondaires arrière, de manière à relier en trois points de fixation secondaires la ferrure inférieure au carter de soufflante du turboréacteur ;
- les deux bielles secondaires arrière sont montées sur la ferrure inférieure par l'intermédiaire d'un palonnier ;
- la ferrure supérieure est également reliée au carter de soufflante du turboréacteur.

L'invention sera mieux comprise à la lecture de la description qui suit et à l'examen des figures qui l'accompagnent. Les figures représentent :
- Figure 1 : une représentation schématique d'un ensemble selon l'invention vue de côté ;
- Figure 2 : une représentation schématique de l'ensemble selon l'invention vue de derrière ;
- Figure 3A 3B et 3C : une représentation schématique selon l'invention de la liaison entre le mât de fixation, le dispositif d'attache, et le turboréacteur d'un aéronef.

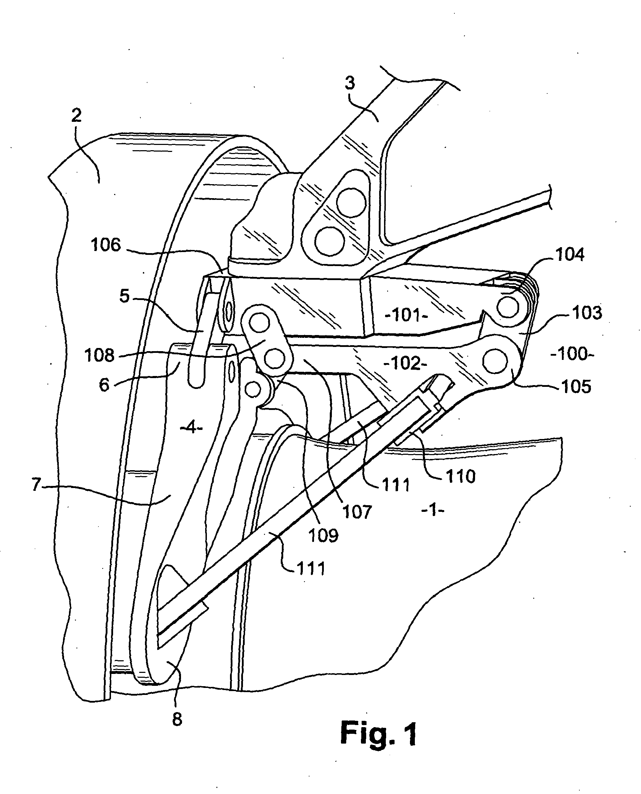

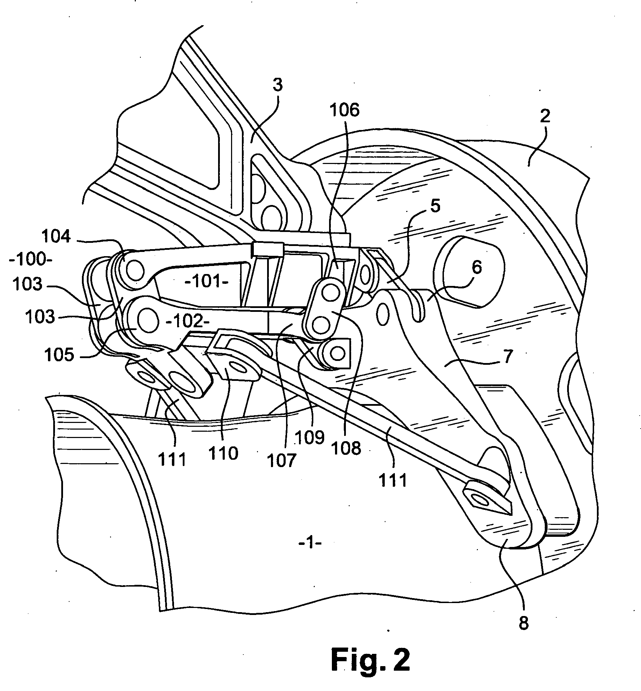

Sur les figures 1 et 2 est représenté un mât de fixation 3 solidaire d'un carter de soufflante 2 d'un turboréacteur 1. Le mât de fixation 3 est relié audit carter de soufflante 2 par un dispositif d'attache avant 100 selon l'invention.

Le dispositif d'attache avant 100 comporte une ferrure supérieure 101 et une ferrure inférieure 102 est située au-dessous de la ferrure supérieure 101. La ferrure supérieure 101 est fixée, de manière classique, d'une part au mât de fixation 3 et d'autre part à une structure arrière 4 du carter de soufflante 2. Plus précisément, la ferrure supérieure 101 est montée fixe sur le mât de fixation 3 situé au-dessus de ladite ferrure supérieure 101. La liaison entre la ferrure supérieure 101 et une partie centrale 6 de la structure arrière 4 du carter de soufflante 2 est assurée par deux bielles 5 (une seule bielle visible sur la figure 1). La partie arrière 4 du carter de soufflante 2 a une forme semi-circulaire suivant un contour supérieur de la partie cylindrique circulaire du turboréacteur. La partie arrière 4 du carter de soufflante 2 a sensiblement la forme d'un U renversé, la base du U formant la partie centrale 6, et chaque branche 7 du U épousant un flanc droit ou gauche de la partie cylindrique du turboréacteur 1.

Conformément à l'invention, la ferrure supérieure 101 est reliée à la ferrure inférieure 102 par des attaches primaires 103, 108. Par exemple, comme cela est représenté aux figures 1 et 2, la ferrure supérieure 101 est reliée à la ferrure supérieure 102 par un système de bielles primaires 103, 108. Plus précisément, deux bielles primaires arrière 103 relient une extrémité arrière 104 de la ferrure supérieure 101 à une extrémité arrière 105 de la ferrure inférieure 102. L'extrémité avant 106 de la ferrure supérieure 101 est, quant à elle, reliée à l'extrémité avant 107 de la ferrure inférieure 102 par deux bielles avant primaires 108 (une seule bielle avant primaire visible sur les figures 1 et 2).

Les bielles avant primaires 108 et les bielles arrière primaires 103 forment les points de fixation primaires 103, 108 reliant la ferrure supérieure 101 à la ferrure inférieure 102.

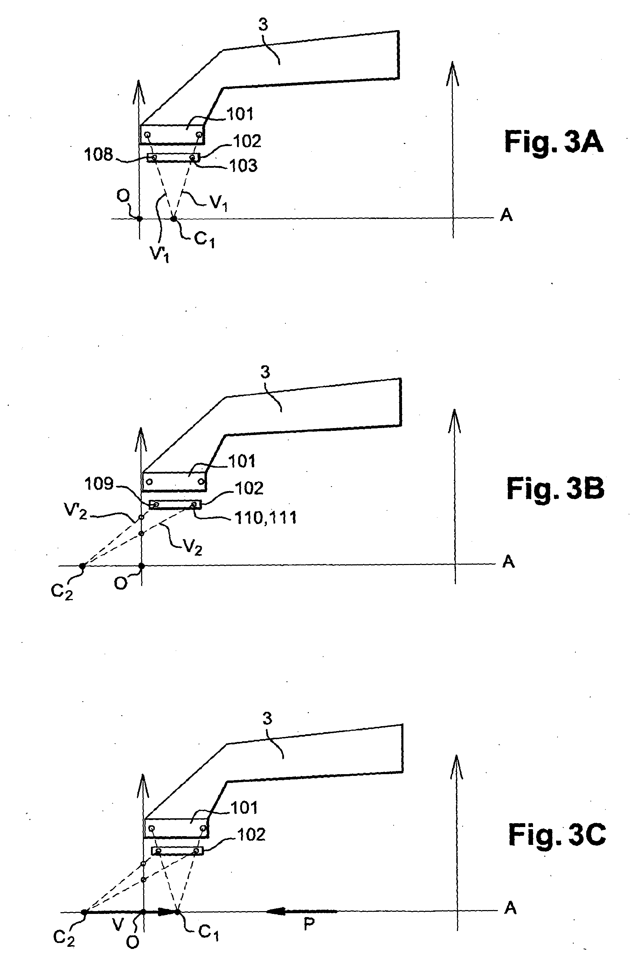

Comme cela est représenté schématiquement sur la figure 3A, les vecteurs primaires (v1, v'1) passant par les points de fixation primaires 103, 108 entre la ferrure supérieure 101 et la ferrure inférieure 102 du dispositif d'attache avant 100 selon l'invention convergent vers un point de convergence primaire C1 situé sur l'axe A du turboréacteur 1.

La ferrure inférieure 102 est, quant à elle, directement reliée à la structure arrière 4 du carter de soufflante 2 du turboréacteur 1 par des attaches secondaires 109,110,111. Les attaches secondaires 109, 110, 111 comportent une bielle secondaire avant 109 reliant l'extrémité avant 107 de la ferrure inférieure 102 à la structure arrière 4 du carter de soufflante 2 du turboréacteur 1. Plus précisément, la bielle secondaire avant 109 est montée sur la partie centrale 6 de la structure arrière 4 du carter de soufflante 2. Les attaches secondaires 109, 110, 111 comportent par ailleurs un palonnier 110 situé au niveau de l'extrémité arrière 105 de la bielle inférieure 102. Le palonnier 110 relit deux bielles secondaires arrière 111 à une partie base 8 des deux branches 7 de la structure arrière 4 du carter de soufflante 2. L'utilisation du palonnier 110 permet un montage selon un seul degré de liberté pour la poussée du moteur alors que la forme cylindrique du turboréacteur 1 impose lui d'installer deux bielles secondaires arrière 111 latérales. Ainsi, chaque bielle secondaire arrière 111 est reliée à un flanc différent, droit ou gauche, du turboréacteur 1. Les bielles secondaires arrière 111 relient l'extrémité arrière 105 de la ferrure inférieure 102 à l'avant du turboréacteur 1. Le palonnier 110 impose que les efforts transitant par chacune des bielles secondaires arrière 111 soient identiques et que l'ensemble palonnier 110 / bielles secondaires arrière 111 soit insensible aux éventuelles déformations du turboréacteur 1.

Comme cela est représenté sur la figure 3B, les attaches secondaires 109, 110, 111 forment des points de fixation secondaires reliant la ferrure inférieure 102 du dispositif d'attache avant 100 de l'invention au turboréacteur 1. Les vecteurs secondaires (v2, v'2) passant par les points de fixation secondaires 109, 110, 111 convergent en un point de convergence secondaire C2 situé sur l'axe A du turboréacteur 1. Le point de convergence secondaire C2 est situé en amont du point de convergence primaire C1, par rapport au sens d'avancement de l'aéronef muni du turboréacteur 1.

Comme cela est représenté schématiquement sur la figure 3C, le vecteur V de reprise des efforts de poussée, résultant du dispositif d'attache avant 100 selon l'invention, transite du point de convergence secondaire C2 vers le point de convergence primaire C1, et est confondu avec l'axe A du turboréacteur 1. Aussi, le vecteur V, destiné à reprendre les efforts de poussée P n'impose aucune flexion au turboréacteur 1. Le vecteur V de reprise des efforts de poussée compense les efforts de poussée P du turboréacteur 1 dans l'axe A du turboréacteur 1, le couple sur le carter de soufflante 2 du turboréacteur 1 étant alors nul.

## Revendications

1. Ensemble turboréacteur et dispositif d'attache avant (100) du turboréacteur (1) à un mât (3) de fixation d'aéronef apte à reprendre les efforts de poussée du turboréacteur, **caractérisé en ce qu'**il comporte une ferrure supérieure (101), une ferrure inférieure (102), des attaches de fixation primaires (103, 108) reliant la ferrure supérieure à la ferrure inférieure et des attaches de fixation secondaires (109, 110, 111) destinés à relier la ferrure inférieure au turboréacteur, le vecteur (V) de reprise des efforts de poussée, résultant d'une part du point de convergence (C1) des vecteurs primaires (v1, v'1) passant par les attaches de fixation primaires, et d'autre part du point de convergence (C2) des vecteurs secondaires (v2, v'2) passant par les attaches de fixation secondaires, et qui est apte à transmettre les efforts de poussée du turboréacteur au mât de fixation, s'étend selon l'axe (A) du turboréacteur.

2. Ensemble selon la revendication 1, **caractérisé en ce que** le point de convergence (C1) des vecteurs primaires (v1, v'1) est situé sur l'axe du turboréacteur.

3. Ensemble selon l'une des revendications 1 à 2, **caractérisé en ce que** le point de convergence (C2) des vecteurs secondaires (v2, v'2) est situé sur l'axe du turboréacteur.

4. Ensemble selon les revendications 2 et 3, **caractérisé en ce que** le point de convergence (C1) des vecteurs primaires (v1, v'1) est situé en aval du point de convergence des vecteurs secondaires (v2, v'2).

5. Ensemble selon l'une des revendications 2 à 4, **caractérisé en ce qu'**il comporte des attaches primaires (103, 108) munies d'au moins une bielle primaire avant (108) et d'au moins une bielle primaire arrière (103), de manière à relier en deux points de fixation primaires la ferrure supérieure et la ferrure inférieure.

6. Ensemble selon l'une des revendications 3 à 5, **caractérisé en ce qu'**il comporte des attaches secondaires (109, 110, 111) munies d'au moins une bielle secondaire avant (109) et d'au moins deux bielles secondaires arrière (111), de manière à être apte à relier en trois points de fixation secondaires la ferrure inférieure au carter de soufflante (2) du turboréacteur.

7. Ensemble selon la revendication 6, **caractérisé en ce que** les deux bielles secondaires arrière sont montées sur la ferrure inférieure par l'intermédiaire d'un palonnier (110).

8. Ensemble selon l'une des revendications 1 à 7, **caractérisé en ce que** la ferrure supérieure est également apte à être reliée au carter de soufflante du turboréacteur.

## Claims

1. A turbojet engine assembly and a turbojet engine (1) front fastening device (100) to a strut (3) for fixing to an aircraft, able to absorb the turbojet engine thrust strain, **characterised in that** it comprises an upper bracket (101), a lower bracket (102), primary lugs (103, 108) linking the upper bracket to the lower bracket and secondary lugs (109, 110, 111) destined to link up the lower bracket to the turbojet engine, the thrust strain absorption vector (V) resulting on the one hand from the point of convergence (C1) of the primary vectors (v1, v'1), passing through the primary lugs, and, on the other hand, from the point of convergence (C2) of the secondary vectors (v2, v'2), passing through the secondary lugs, and which is able to transmit the turbojet engine thrust strain to the fixing strut, being extended according to the axis (A) of the turbojet engine.

2. An assembly according to claim 1, **characterised in that** the point of convergence (C1) of the primary vectors (v1, v'1) is located on the axis of the turbojet engine.

3. An assembly according to one of the claims 1 to 2, **characterised in that** the point of convergence (C2) of the secondary vectors (v2, v'2) is located on the axis of the turbojet engine.

4. An assembly according to claims 2 and 3, **characterised in that** the point of convergence (C1) of the primary vectors (v1, v'1) is located downstream from the point of convergence of the secondary vectors (v2, v'2).

5. An assembly according to one of the claims 2 to 4, **characterised in that** it comprises primary lugs (103, 108), equipped with at least a front primary connecting rod (108) and at least a rear primary connecting rod (103), for the purpose of linking the upper bracket to the lower bracket by way of two primary lugs.

6. An assembly according to one of the claims 3 to 5, **characterised in that** it comprises secondary lugs (109, 110, 111), equipped with at least a front secondary connecting rod (109) and at least two rear secondary connecting rods (111), for the purpose of being able to link the lower bracket to the ventilator crankcase (2) of the turbojet engine by way of three secondary lugs.

7. An assembly according to claim 6, **characterised in that** the two rear secondary connecting rods are mounted onto the lower bracket by way of a spreader (110).

8. An assembly according to one of the claims 1 to 7, **characterised in that** the upper bracket is also able to be linked to the ventilator crankcase of the turbojet engine.

## Patentansprüche

1. Einheit Turbostrahlmotor und vordere Befestigungsvorrichtung (100) des Turbostrahlmotors (1) mit einer Strebe (3) zur Befestigung an einem Flugzeug, die in der Lage ist, die Schubkräfte des Turbostrahlmotors aufzunehmen, **dadurch gekennzeichnet, dass** sie einen oberen Beschlag (101), einen unteren Beschlag (102), Primärbefestigungen (103, 108) zur Verbindung des oberen Beschlages mit dem unteren Beschlag und Sekundärbefestigungen (109, 110, 111) zur Verbindung des unteren Beschlages mit dem Turbostrahlmotor enthält, wobei der Vektor (V) für die Aufnahme der Schubkräfte, der sich einerseits aus dem Knotenpunkt (C1) der Primärvektoren (v1, v'1) ergibt, die durch die Primärbefestigungen verlaufen, und andererseits aus dem Knotenpunkt (C2) der Sekundärvektoren (v2, v'2), die durch die Sekundärbefestigungen verlaufen, und der in der Lage ist, die Schubkräfte des Turbostrahlmotors auf die Befestigungsstrebe zu übertragen, auf der Achse (A) des Turbostrahlmotors verläuft.

2. Einheit nach Anspruch 1, **dadurch gekennzeichnet, dass** der Knotenpunkt (C1) der Primärvektoren (v1, v'1) auf der Achse des Turbostrahlmotors liegt.

3. Einheit nach einem der Ansprüche 1 bis 2, **dadurch gekennzeichnet, dass** der Knotenpunkt (C2) der Sekundärvektoren (v2, v'2) auf der Achse des Turbostrahlmotors liegt.

4. Einheit nach den Ansprüchen 2 und 3, **dadurch gekennzeichnet, dass** der Knotenpunkt (C1) der Primärvektoren (v1, v'1) hinter dem Knotenpunkt der Sekundärvektoren (v2, v'2) liegt.

5. Einheit nach einem der Ansprüche 2 bis 4, **dadurch gekennzeichnet, dass** sie Primärbefestigungen (103, 108) mit zumindest einer vorderen Primärsteuerstange (108) und zumindest einer hinteren Primärsteuerstange (103) enthält, sodass sie den oberen Beschlag und den unteren Beschlag an zwei Primärbefestigungspunkten miteinander verbindet.

6. Einheit nach einem der Ansprüche 3 bis 5, **dadurch gekennzeichnet, dass** sie Sekundärbefestigungen (109, 110, 111) mit zumindest einer vorderen Sekundärsteuerstange (109) und zumindest zwei hinteren Sekundärsteuerstangen (111) enthält, sodass sie in der Lage ist, den unteren Beschlag an drei Sekundärbefestigungspunkten mit dem Gebläsegehäuse (2) des Turbostrahlmotors zu verbinden.

7. Einheit nach Anspruch 6, **dadurch gekennzeichnet, dass** die beiden hinteren Sekundärsteuerstangen über ein Ausgleichsgestänge (110) auf dem unteren Beschlag befestigt sind.

8. Einheit nach einem der Ansprüche 1 bis 7, **dadurch gekennzeichnet, dass** der obere Beschlag ebenfalls mit dem Gebläsegehäuse des Turbostrahlmotors verbunden werden kann.
